# EUROPEAN PATENT APPLICATION

(11) **EP 4 765 553 A1**
(43) Date of publication of application: **24.06.2026**
(21) Application number: 25175060.0
(22) Date of filing: 08.05.2025
(51) Int. Cl.: H02J 3/48

(54) **CONTROL METHOD, ENERGY SYSTEM, POWER UNIT AND RELATED APPARATUS**

(30) Priority: 17.12.2024 CN 202411867750
(71) Applicant: Sungrow Power Supply Co., Ltd., Hefei, Anhui 230088 (CN)
(72) Inventor: CAO, Jinhu, Hefei, Anhui 230088 (CN); HU, Fanyu, Hefei, Anhui 230088 (CN); FENG, Jigui, Hefei, Anhui 230088 (CN); LI, Wei, Hefei, Anhui 230088 (CN)
(74) Representative: Zacco Norway AS

(57) **Abstract**

A control method and a related apparatus are provided. The control method includes: determining actual maximum power limits of the multiple power units, in a process of the multiple power units outputting power with maximum output capacities; and issuing target unit power to the multiple power units respectively, based on the actual maximum power limits of the multiple power units; where the target unit power of each of the multiple power units is less than or equal to the actual maximum power limit of the power unit. The control method and the related apparatus can improve the rationality of power output distribution within the energy system.

## Description

### FIELD

The present disclosure relate to a control method, an energy system, a power unit, and a related apparatus.

### BACKGROUND

Once connected to a power grid, a relational energy system is scheduled by the power grid and outputs power to the power grid based on a target demand power indicated by the power grid.

For example, the energy system is a photovoltaic power station. The photovoltaic power station may include multiple power units, and can output the target demand power to the power grid by controlling the multiple power units.

However, due to the multiple power units having different actual output capabilities, the relational energy system has a problem of unreasonable power output allocation.

### SUMMARY

A control method and a related apparatus are provided in the present disclosure, to improve the rationality of power output allocation within an energy system.

In a first aspect, a control method for an energy system is provided according to embodiments of the present disclosure. The energy system includes multiple power units, and each of the multiple power units includes a power converter; where the control method includes: determining actual maximum power limits of the multiple power units, in a process of the multiple power units outputting power with maximum output capacities; and issuing target unit power to the multiple power units respectively, based on the actual maximum power limits of the multiple power units; where the target unit power of each of the multiple power units is less than or equal to the actual maximum power limit of the power unit.

In an embodiment, determining actual maximum power limits of the multiple power units, in a process of the power units outputting power with maximum output capacities includes: controlling one power unit of the multiple power units as a target power unit to output power with the maximum output capacity and controlling other power units of the multiple power units to output a power difference between a target demand power and an actual output power of the target power unit, based on the target demand power; and determining a maximum of the actual output power as the actual maximum power limit of the target power unit, in the process of the target power unit outputting the power with the maximum output capacity.

In an embodiment, each of the multiple power units includes multiple power converters; and the step of controlling one power unit of the multiple power units as a target power unit to output power with the maximum output capacity includes: for each power converter of the multiple power converters in the target power unit, controlling the power converter to output power with a maximum output capacity; and determining a maximum of an actual output power of the power converter as the actual maximum power limit of the power converter, in the process of the power converter outputting the power with the maximum output capacity.

In an embodiment, the step of issuing target unit power to the multiple power units, based on the actual maximum power limits of the multiple power unit includes: for each of the multiple power units, determining a proportion coefficient of the actual maximum power limit of the power unit relative to a sum of actual maximum power limits of the multiple power units, based on the actual maximum power limits of the multiple power units; and distributing the target unit power to the power unit based on the proportion coefficient of the power unit and a target demand power.

In a second aspect, a control method for a power unit is provided according to embodiments of the present disclosure. The power unit includes multiple power converters. The control method includes: determining actual maximum power limits of the multiple power converters, in a process of the multiple power converters outputting power with maximum output capacities; and issuing target converter power to the multiple power converters respectively, based on the actual maximum power limits of the multiple power converters; where the target converter power of each of the multiple power converters is less than or equal to the actual maximum power limit of the power converter.

In an embodiment, the step of determining actual maximum power limits of the multiple power converters, in a process of the multiple power converters outputting power with maximum output capacities includes: controlling one power converter of the multiple power converters as a target power converter to output power with the maximum output capacity and controlling other power converters of the multiple power converters to output a power difference between the target unit power and an actual output power of the target power converter, based on a target unit power; and determining a maximum of the actual output power as the actual maximum power limit of the target power converter, in the process of the target power converter outputting the power with the maximum output capacity.

In an embodiment, the step of issuing target converter power to the multiple power converters respectively, based on the actual maximum power limits of the multiple power converters includes: for each of the power converters, determining a proportion coefficient of the actual maximum power limit of the power converter relative to a sum of actual maximum power limits of the multiple power converters, based on the actual maximum power limits of the multiple power converters; and distributing the target converter power to the power converter based on the proportion coefficient of the power converter and the target unit power.

In a third aspect, an energy system is provided according to embodiments of the present disclosure. The energy system includes: multiple power units, where each of the multiple power units includes at least one power converter; and a controller configured to: determine actual maximum power limits of the multiple power units, in a process of the multiple power units outputting power with maximum output capacities; and issue target unit power to the multiple power units respectively, based on the actual maximum power limits of the multiple power units, where the target unit power of each of the multiple power units is less than or equal to the actual maximum power limit of the power unit.

In an embodiment, the controller is configured to control one power unit of the multiple power units as a target power unit to output power with the maximum output capacity and control other power units of the multiple power units to output a power difference between a target demand power and an actual output power of the target power unit, based on the target demand power; and determine a maximum of the actual output power as the actual maximum power limit of the target power unit, in the process of the target power unit outputting the power with the maximum output capacity.

In an embodiment, each of the multiple power units includes multiple power converters; the controller is configured to: for each of the multiple power converters in the target power unit, control the power converter to output power with a maximum output capacity; and determine a maximum of an actual output power of the power converter as the actual maximum power limit of the power converter, in a process of the power converter outputting the power with the maximum output capacity.

In an embodiment, the controller is configured to: for each of the multiple power units, determine a proportion coefficient of the actual maximum power limit of the power unit relative to a sum of actual maximum power limits of the multiple power units, based on the actual maximum power limits of the multiple power units; and distribute the target unit power to the power unit based on the proportion coefficient of the power unit and a target demand power.

In a fourth aspect, a power unit is provided according to embodiments of the present disclosure. The power unit includes multiple power converters; and a controller configured to: determine actual maximum power limits of the multiple power converters, in a process of the multiple power converters output power with maximum output capacities; and issue target converter power to the multiple power converters respectively, based on the actual maximum power limits of the multiple power converters, where the target converter power of each of the multiple power converters is less than or equal to the actual maximum power limit of the power converter.

In an embodiment, the controller is configured to control one power converter of the multiple power converters as a target power converter to output power with the maximum output capacity and control other power converters of the multiple power converters to output a power difference between the target unit power and an actual output power of the target power unit, based on the target unit power; and determine a maximum of the actual output power as the actual maximum power limit of the target power converter, in the process of the target power converter outputting the power with the maximum output capacity.

In an embodiment, the controller is configured to for each of the power converters, determine a proportion coefficient of the actual maximum power limit of the power converter relative to a sum of actual maximum power limits of the multiple power converters, based on the actual maximum power limits of the power converters; and distribute the target converter power to the power converter based on the proportion coefficient of the power converter and the target unit power.

In a fifth aspect, a control apparatus is further provided according to embodiments of the present disclosure. The control apparatus includes: a processor and a memory, where the memory is configured to store a program, instructions, or codes, and the processor is configured to execute the program, the instructions, or the codes in the memory to implement the method described above.

In a sixth aspect, a computer-readable storage medium is provided according to embodiments of the present disclosure. The computer-readable storage medium stores a computer program, where the computer program is loaded by a processor to execute the method described above.

In multiple embodiments of the present disclosure, by determining the actual maximum power limits of the multiple power units in a process of the multiple power units outputting power with the maximum output capacities, and issuing a reasonable target unit power to the multiple power units based on the actual output capacities, the actual output power of each power unit does not exceed its actual maximum power limit. In this way, the problem of insufficient power output or overload caused by mismatch between the actual power capacity and the target unit power of the power unit in the relational method can be solved effectively, and the rationality of resource allocation in the energy system is improved.

### BRIEF DESCRIPTION OF THE DRAWINGS

Hereinafter drawings to be applied in embodiments of the present disclosure or in the relational technology are briefly described, in order to illustrate technical solutions according to embodiments of the present disclosure or in the relational technology more clearly. Apparently, the drawings in the following descriptions are only some embodiments of the present disclosure, and other drawings may be obtained by those skilled in the art based on the provided drawings without any creative effort.
FIG. 1 is a schematic diagram illustrating modules in an energy system according to an embodiment of the present disclosure;
FIG. 2 is a flowchart of a control method for an energy system according to an embodiment of the present disclosure;
FIG. 3 is a schematic diagram illustrating a process of controlling a power unit by a control apparatus for an energy system according to an embodiment of the present disclosure;
FIG. 4 is a flowchart of a control method for a power unit according to an embodiment of the present disclosure;
FIG. 5 is a schematic diagram illustrating modules in a power unit according to an embodiment of the present disclosure;
FIG. 6 is a schematic diagram illustrating a process of controlling a power converter by a control apparatus for a power unit according to an embodiment of the present disclosure; and
FIG. 7 is a schematic diagram illustrating modules in a control apparatus according to an embodiment of the present disclosure.

### DETAILED DESCRIPTION

The solutions in the embodiments of the present disclosure will be described clearly and completely hereinafter in conjunction with the accompanying drawings in the embodiments of the present disclosure. It is apparent that the described embodiments are only a part of the embodiments of the present disclosure and not all of the embodiments.

In the description of the present disclosure, it should be understood that the terms such as "first" and "second" are merely used for descriptive purposes, and should not be understood as indicating or implying relative importance or implicitly indicating the number of indicated technical features. Therefore, the features defined by "first" and "second" may explicitly or implicitly include one or more of the features. In the description of the embodiment of the present disclosure, the meaning of "multiple" is two or more, unless specifically defined otherwise.

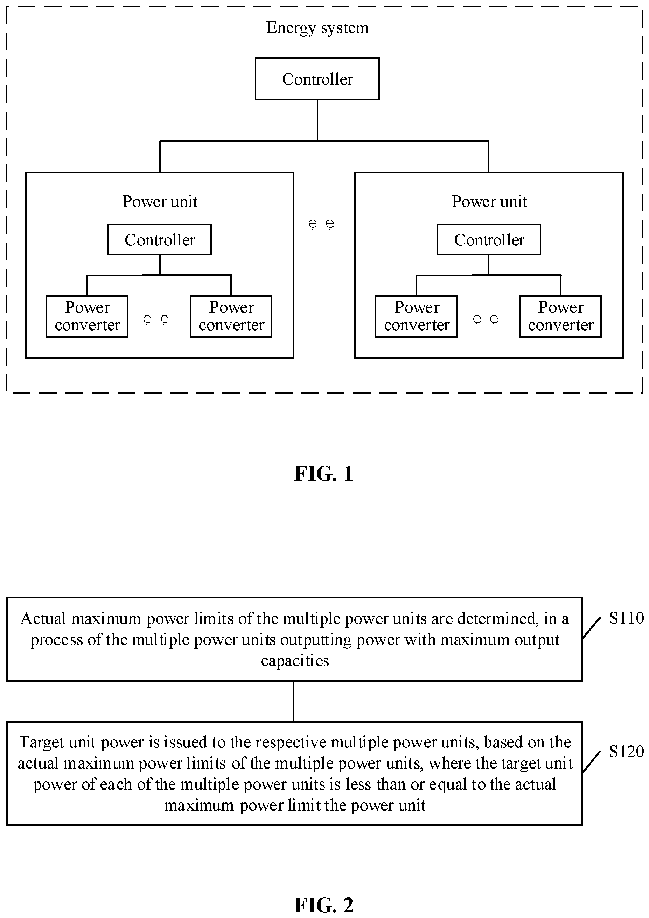

Referring to FIG. 1, an energy system is scheduled by the power grid, and outputs power to the power grid based on a target demand power issued by the power grid.

In an embodiment, the energy system being a photovoltaic power station is taken as an example. The photovoltaic power station may include multiple power units which are coordinated and controlled by the power grid to output electrical energy to the power grid. The photovoltaic power station has a power station control system which is implemented by a controller. The power station control system can manage and monitor the operation of the photovoltaic power station. The power station control system may receive a demand instruction issued by the power grid. The demand instruction may indicate a target demand power for the photovoltaic power station. Furthermore, the power station control system may issue unit control instructions to the multiple power units based on the target demand power, and indicate the target unit power of each of the power units through the unit control instructions.

The power unit may include multiple power converters and a controller. The controller of the power unit may control the operations of the multiple power converters. The controller of the power unit can perform a data communication with the controller of the energy system. The controller of the power unit may receive the unit control instruction issued by the controller of the energy system, and control a sum of the power output by the multiple power converters to meet the target unit power indicated by the unit control instruction. In this embodiment, the power converter may be a photovoltaic inverter. In some embodiments, the power unit may include a data collector, and the data collector may serve as a controller for the power unit mentioned before. In some embodiments, the controller of the power converter may also be configured as the controller of the power unit.

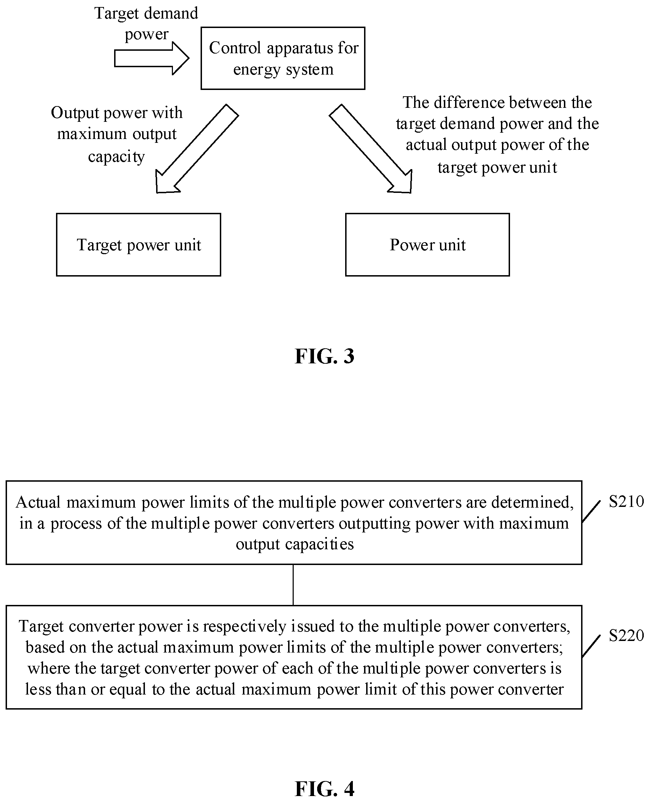

Referring to FIGs. 2 and 3, a control method for an energy system is provided according to an embodiment of the present disclosure. The control method for the energy system may be applied to a control apparatus of the energy system. The control apparatus for the energy system may be an electronic apparatus having a certain level of computational ability. In some embodiments, the control apparatus for the energy system may also refer to a program module running in an electronic apparatus. The control apparatus for the energy system may be part of a control system for a power station. In a specific example, the control method for the energy system may be executed in a controller of the energy system.

The control method for the energy system includes steps S110 to S120.

In step S110, actual maximum power limits of the multiple power units are determined, in a process of the multiple power units outputting power with maximum output capacities.

In step S120: target unit power is issued to the multiple power units, based on the actual maximum power limits of the multiple power units, where the target unit power of each of the multiple power units is less than or equal to the actual maximum power limit the power unit.

In this embodiment, the control apparatus for the energy system may determine the actual maximum power limit of each power unit in the process of the multiple power units respectively outputting power with the maximum output capacities, to evaluate the actual output capability of each power unit. Specifically, the maximum output capacity of each power unit is affected by factors such as the performance of the apparatus, environmental factors (such as temperature, or illumination) or load changes. In practical applications, after the control apparatus for the energy system starts multiple power units, the control apparatus for the energy system can control the multiple power units to output power with the maximum output capacity respectively, in a process responding to the power demand of the power grid; and determine the maximum of the actual output power of each power unit in this process, by monitoring the actual output power of each power unit. The maximum of the actual output power of each power unit may be used as the actual maximum power limit of the power unit. In an embodiment, the control apparatus for the energy system may control only one power unit as the target power unit to output power with the maximum output capacity, at the same time. In other embodiments, in the process of responding to the target demand power, the control apparatus for the energy system may determine only one power unit as the target power unit to output power with the maximum output capacity. In this way, the accuracy of the determined actual maximum power limit is improved.

In this embodiment, after determining the actual maximum power limits of the multiple power units, the control apparatus for the energy system may adjust the target unit power of the respective power units based on the determined actual maximum power limits. Specifically, when distributing the target unit power, the control apparatus ensures that the target unit power of each of the multiple power units is less than or equal to the actual maximum power limit of this power unit.

For example, in a photovoltaic power station, it is assumed that the photovoltaic power station includes multiple power units, and each power unit includes multiple photovoltaic inverters. The photovoltaic inverter converts direct current generated by a photovoltaic assembly into alternating current. It is assumed that a power unit A can reach its rated power of 100kW under good sunshine conditions. However, the maximum value of the actual output power of the power unit A can only reach 80kW due to the equipment aging. A power unit B, on the other hand, can reach its rated power of 150kW under good operating conditions. In relational approaches, a simple equal distribution method may be applied. For example, the target demand power (for example, 200kW) is equally distributed to two power units, that is, each power unit outputs 100kW. However, such distribution method cannot match the actual output capacity of the power unit A which is only 80 kW. Thus, the target demand power cannot be reached ultimately. In the present disclosure, the control apparatus may target the actual output of 200kW. In consideration of the actual maximum power limit of each power unit, the control apparatus distributes the target unit power to two power units. The target unit power of each power unit is less than or equal to the actual maximum power limit of this power unit. In this way, each power unit operates within a proper capability, and the target demand power is able to be met. For example, the target unit power issued by the control apparatus to the power unit A may be 70kW, which is less than the actual maximum power limit of the power unit A of 80 kW, and the target unit power issued by the control apparatus to the power unit B may be 130kW, which is less than the actual maximum power limit of the power unit B of 150kW.

In multiple embodiments of the present disclosure, by determining the actual maximum power limits of the multiple power units in a process of the multiple power units outputting power with the maximum output capacities, and issuing a reasonable target unit power to the multiple power units based on the actual output capacities, the actual output power of each power unit does not exceed its actual maximum power limit. In this way, the problem of insufficient power output or overload caused by mismatch between the actual power capacity and the target unit power of the power unit in the relational method can be solved effectively, and the rationality of resource distribution in the energy system is improved.

In some embodiments, based on a target demand power, one power unit is of the multiple power units is controlled as a target power unit to output power with the maximum output capacity, and other power units of the multiple power units are controlled to output a power difference between the target demand power and an actual output power of the target power unit; and the maximum of the actual output power is determined as the actual maximum power limit of the target power unit, in the process of the target power unit outputting power with the maximum output capacity.

In this embodiment, once receiving the target demand power issued by the power grid, the control apparatus for the energy system may select one power unit from the multiple power units as the target power unit to output power with the maximum output capacity, and reasonably distribute the output power of other power units to implement the target demand power. In a process of controlling the multiple power units, the control apparatus may first determine one power unit as the target power unit based on the target demand power, and control the target power unit to output power with its maximum output capacity. In this process, the control device may record the maximum of the actual output power that the target power unit can achieve under this condition by monitoring the actual output power of the target power unit, and determine the maximum of the actual output power as the actual maximum power limit of the target power unit. The control apparatus for the energy system adjusts the output power of other power units based on the difference between the target demand power and the actual output power of the target power unit, thereby ensuring that the output power reaches the target demand power.

For example, in a photovoltaic power station, it is assumed that the photovoltaic power station includes four power units, which are a power unit A, a power unit B, a power unit C, and a power unit D. The target demand power of the power grid is 400kW. It is assumed that the power unit A has a rated power of 250kW, the power unit B has a rated power of 200kW, the power unit C has a rated power of 180kW, and the power unit D has a rated power of 300kW.

In this case, the control apparatus for the energy system, based on the target demand power of 400KW, first selects the power unit B as the target power unit to output power with the maximum output capacity. Due to factors such as equipment aging, environmental conditions, the maximum of the actual output power of the power unit B may be only 180kW. The control apparatus for the energy system records the maximum of the actual output power of the power unit B, and determines the maximum of the actual output power of the power unit B as the actual maximum power limit of the power unit B, that is, 180kW. The control apparatus for the energy system calculates that a difference between the target demand power and the actual maximum power limit of the power unit B is 220kW. In this condition, the control apparatus for the energy system may distribute the difference of power demand of 220kW to the power unit A, the power unit C, and the power unit D. For example, 80kW is distributed to the power unit A, 60kW is distributed to the power unit C, and 80kW is distributed to the power unit D. In another way, the difference of power demand of 220kW may also be equally distributed to the power unit A, the power unit C, and the power unit D.

Similarly, once receiving a new target demand power, the control apparatus for the energy system may reselect a power unit as the target power unit based on the new target demand power. For example, assuming that the target demand power is increased to 500kW, the control apparatus for the energy system may determine the power unit A as the target power unit, control the power unit A to output power with the maximum output capacity, obtain the maximum of the actual output power of the power unit A, and determine the maximum of the actual output power of the power unit A as the actual maximum power limit of the power unit A. Accordingly, the control apparatus for the energy system distributes the difference to other power units. In the same way, the control apparatus for the energy system can determine the actual maximum power limit of each power unit.

In some embodiments, the control apparatus for the energy system controls the target power unit to output power with the maximum output capacity, and the difference between the target demand power and the actual output power of the power unit is 0. In this case, the actual maximum power limit of the target power unit is greater than or equal to the target demand power. Thus, the maximum value of the actual output power of the target power unit cannot be obtained if only the target power unit outputs power. In this condition, the control apparatus for the energy system may control all the power units to jointly bear the target demand power.

In some embodiments, the power unit includes multiple power converters. The control apparatus for the energy system may control the multiple power converters in the target power unit to output power with maximum output capacities respective. For each power converter, the maximum of the actual output power of the power converter is determined as the actual maximum power limit of the power converter, in the process of the power converter in the target power unit outputting power with the maximum output capacity.

In this embodiment, the power unit includes multiple power converters, and each of the multiple power converters is configured to convert direct current to alternating current. The control apparatus for the energy system controls the multiple power converters in the target power unit to output power with the maximum output capacities, such that the target power unit outputs the power with the maximum output capacity. Furthermore, the control apparatus for the energy system may monitor the actual output power of each power converter to record the maximum of its actual output power. The maximum of the actual output power of the power converter may be used as the actual maximum power limit of the power converter. In an embodiment, the actual output power of the power converter may be affected by factors such as the performance of the apparatus, environmental factors (such as temperature, illumination, or the like) or load changes. Therefore, the actual output power of the power converter is not always able to reach the rated power. The control apparatus for the energy system determines the maximum of the actual output power of each power converter in the target power unit, in the process of each power converter outputting power with the maximum output capacity, thereby obtaining the actual maximum power limit of the target power unit accurately. Furthermore, after determining the actual maximum power limits of the multiple power converters in the target power unit, the controller of the target power unit may distribute the output power based on the actual maximum power limits of the multiple power converters if the target power unit no longer outputs power with the maximum output capacity later.

For example, in a photovoltaic power station, it is assumed that the power unit includes three power converters, namely a power converter a, a power converter b, and a power converter c. The rated power of the power unit is 100kW under good sunshine conditions. However, due to factors such as equipment aging, environmental conditions, the maximum of the actual output power of the power unit may be less than the rated power thereof. In the process of the power unit outputting power with the maximum output capacity as the target power unit, the power converter a, the power converter b and the power converter c all output power with the maximum output capacities. It is obtained that the maximum of the actual output power of the power converter a is 35kW, the maximum of the actual output power of the power converter b is 30kW, and the maximum of the actual output power of the power converter c is 25kW. Thus, the maximum of the actual output power of the power unit is 90kW, instead of 100kW. The control apparatus for the energy system can record the maximum of the actual output power of each power converter and determine the maximum as the actual maximum power limit of the corresponding power converter. Furthermore, the actual maximum power limit of the power converter may be provided to the corresponding control apparatus for the power unit. In subsequent operations, the control apparatus for the power unit distributes the target converter power based on the actual maximum power limits of the multiple power converters.

In some embodiments, for each of the power units, the control apparatus for the energy system may determine a proportion coefficient of the actual maximum power limit of the power unit relative to a sum of actual maximum power limits of the multiple power units, based on the actual maximum power limits of the multiple power units; and issue the target unit power to the power unit based on the proportion coefficient of the power unit and the target demand power.

In this embodiment, the proportion coefficient represents a proportion of the maximum output capacity of this power unit to the maximum output capacity of all power units. Specifically, the control apparatus for the energy system accumulates the actual maximum power limits of the multiple power units to obtain the sum of the actual maximum power limits of the multiple power units, and further calculates a ratio of the actual maximum power limit of each power unit to the sum of the actual maximum power limits to obtain the proportion coefficient of each power unit. Furthermore, the proportion coefficient may also reflect the difference in actual output capabilities among the power units.

In this embodiment, the control apparatus for the energy system may distribute, based on the target demand power, the target unit power to the multiple power units respectively, in reference to the proportion coefficients of the power units. In this way, the control apparatus for the energy system can reasonably distribute the power output task, on the premise that the target unit power of each power unit does not exceed the actual maximum power limit of the corresponding power unit. The overall output of the energy system meets the demand of the power grid. For example, in a photovoltaic power station, it is assumed that the target demand power is 200kW, and the proportion coefficients of the respective power units are 0.4, 0.3 and 0.3. The control apparatus for the energy system distributes the target unit power to the respective power units based on the proportion coefficients, such as 80kW, 60kW and 60kW respectively.

Referring to FIGs. 4, 5 and 6, a control method for a power unit is further provided according to an embodiment of the present disclosure. The control method for the power unit may be applied to a control apparatus for the power unit. The control apparatus for the power unit may be an electronic device having a certain level of computational ability. In some embodiments, the control apparatus for the power unit may also be a program module running in the electronic device. In a specific example, the control method for the power unit may be executed in a controller of the power unit.

In this embodiment, the power unit includes multiple power converters. The control method for the power unit may include the following steps of S210 and S220.

In step S210, actual maximum power limits of the multiple power converters are determined, in a process of the multiple power converters outputting power with maximum output capacities.

In step S220, target converter power is respectively issued to the multiple power converters, based on the actual maximum power limits of the multiple power converters; where the target converter power of each of the multiple power converters is less than or equal to the actual maximum power limit of this power converter.

In this embodiment, the control apparatus for the power unit may determine the actual maximum power limit of each power converter in the process of each power converter outputting power with a maximum output capacity, to evaluate the actual output capability of each power converter. Specifically, the maximum output capacity of each power converter is affected by factors such as the performance of the apparatus, environmental factors (such as temperature, or illumination) or load changes. In a process of responding to the power demand, the control apparatus for the power unit can control the multiple power converters to output power with the maximum output capacities respectively; and determine the maximum of the actual output power of each power converter in this process by monitoring the actual output power of each power converter. The maximum of the actual output power of each power converter may be used as the actual maximum power limit of the power converter. At the same time, the control apparatus for the power unit may allow only one power converter to output power with the maximum output capacity. In an embodiment, in the process of responding to one target unit power, the control apparatus for the power unit may control only one power converter as the target power converter to output power with the maximum output capability. In this way, the accuracy of the determined actual maximum power limit is improved.

In this embodiment, after determining the actual maximum power limits of the multiple power converters, the control apparatus may adjust the target converter power of the respective power converters based on the determined actual maximum power limits. Specifically, when distributing the target converter power, the control apparatus ensures that the target converter power of each power converter is less than or equal to the actual maximum power limit of this power converter.

In multiple embodiments according to the present disclosure, by determining the actual maximum power limit of the multiple power converters in a process of the multiple power converters outputting power with the maximum output capacities, and issuing a reasonable target converter power to the respective power converters based on the actual output capacities, the actual output power of each power converter does not exceed its actual maximum power limit. In this way, the rationality of resource distribution in the energy system is improved.

In some embodiments, the control apparatus for the power unit may control, based on a target unit power, one power converter from the multiple power converters as a target power converter to output power with the maximum output capacity, and control other power converters of the multiple power converters to output a power difference between the target unit power and an actual output power of the target power unit; and determine a maximum of the actual output power as the actual maximum power limit of the target power converter, in the process of the target power converter outputting power with the maximum output capacity.

In this embodiment, the target unit power may be a control instruction received by the control apparatus for the power unit, which indicates a power that the power unit is required to output.

In this embodiment, in the process of the control apparatus for the power unit controlling the multiple power converters to output the target demand power, one power converter may be selected as the target power converter. During controlling the target power converter to output power with the maximum output capacity, the actual maximum power limit of the target power converter is recorded. Thus, in the process of responding to the subsequent target unit power, the other power converter are selected as the target power converter, such that the actual maximum power limit of each power converter is obtained.

In this embodiment, when the control apparatus for the power unit controls the target power converter to output power with the maximum output capacity, a difference between the actual output power of the target power converter and the target unit power is obtained, and other power converters are controlled to output the difference between the actual output power of the target power converter and the target unit power. In this way, the power unit, as a whole, can output the target unit power.

In some embodiments, the control apparatus for the power unit controls the target power converter to output power with the maximum output capacity, and the difference between the target unit power and the actual output power of the power converter is 0. In this case, the actual maximum power limit of the target power converter is greater than or equal to the target unit power. Thus, the maximum of the actual output power of the target power converter cannot be obtained if only the target power converter outputs power. In this condition, the control apparatus for the power unit may control all the power converters to jointly bear the target unit power.

In some embodiments, for each of the power converters, a proportion coefficient of the actual maximum power limit of the power converter relative to a sum of actual maximum power limits of the multiple power converters is determined, based on the actual maximum power limits of the multiple power converters; and the target converter power is distributed to the respective power converters based on the proportion coefficients of the power converters and the target unit power.

In this embodiment, the proportion coefficient of the power converter represents a proportion of the maximum output capacity of this power converter to the maximum output capacity of all power converters. Specifically, the control apparatus for the power unit accumulates the actual maximum power limits of the multiple power converters to obtain the sum of the actual maximum power limits of the multiple power converters, and further calculates a ratio of the actual maximum power limit of each power converter to the sum of the actual maximum power limits to obtain the proportion coefficient of each power converter. Furthermore, the proportion coefficient of the power converter may also reflect the difference in actual output capabilities among power converters.

In this embodiment, the control apparatus for the power converter may distribute, based on target unit power, the target converter power to the respective power converters, in reference to the proportion coefficient of the power converters. In this way, the control apparatus for the energy system can reasonably distribute the power output task on the premise that the target converter power of each power converter does not exceed the actual maximum power limit of the corresponding power unit. The overall output of the power unit meets the power demand.

Referring to FIG. 1, an energy system is provided according to an embodiment of the present disclosure. The energy system includes: multiple power units, where each of the multiple power units includes at least one power converter; and a controller configured to: determine actual maximum power limits of the multiple power units, in a process of the multiple power units outputting power with maximum output capacities; and issue a target unit power to the multiple power units, based on the actual maximum power limits of the multiple power units; where the target unit power of each of the multiple power units is less than or equal to the actual maximum power limit of the power unit.

In this embodiment, the function and effect realized by the energy system may be explained in combination with those of the foregoing embodiments, which will not be described in detail.

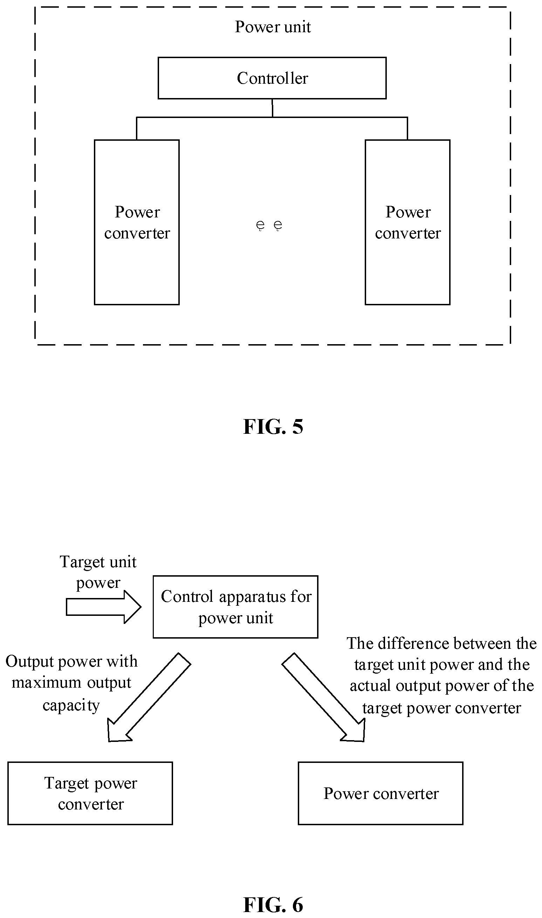

Referring to FIG. 5, a power unit is provided according to an embodiment of the present disclosure. The power unit includes: multiple power converters; and a controller configured to: determine actual maximum power limits of the multiple power converters, in a process of the multiple power converters outputting power with maximum output capacities; and issue target converter power to the multiple power converters, based on the actual maximum power limits of the multiple power converters; where the target converter power of each of the multiple power converters is less than or equal to the actual maximum power limit of the power converter.

In this embodiment, the function and effect realized by the power unit may be explained in combination with the foregoing embodiments, which will not be described in detail.

A control apparatus is further provided according to an embodiment of the present disclosure. The control apparatus includes: a processor and a memory, where the memory is configured to store a program, instructions, or codes, and the processor is configured to execute the program, the instructions, or the codes in the memory to implement the method mentioned according to the above embodiments.

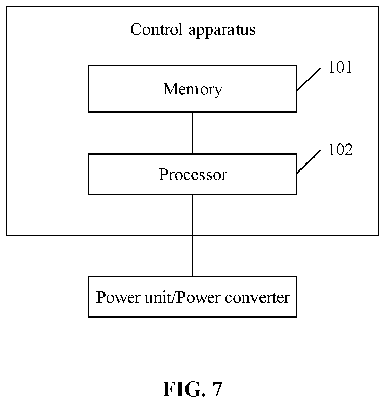

In this embodiment, referring to FIG. 7, the control apparatus may include a memory 101 and a processor 102. The processor 102 may be connected with the power unit, and may issue control instructions to the controller of the power unit. Alternatively, the processor 102 may be connected with the power unit/power converter, and may issue control instructions to the power converter or power unit. The memory may be a random access memory (RAM), a flash memory, a read-only memory (ROM), a non-volatile read-only memory (NVROM) memory, an Electronic Programmable ROM (EPROM), a register, a hard disk, a removable disk, or the like.

The memory 101 may store computer instructions, and when the computer instructions stored in the memory 101 are executed by the processor 102, the processor 102 may execute the control method for the energy system or the control method for the power unit.

All or part of the above embodiments may be implemented by software, hardware, firmware or any combination thereof. When implemented by using software, all or some of the functions may be implemented in a form of a computer program product. The computer program product includes one or more computer instructions. When the computer program instructions are loaded and executed on a computer, all or part of the processes or functions described in the embodiments of the present disclosure are generated. The computer may be a general-purpose computer, a special-purpose computer, a computer network, or another programmable apparatus. The computer instructions may be stored in a computer readable storage medium or transmitted from one computer readable storage medium to another computer readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer readable storage medium may be any available medium capable of being accessed by a computer or include a data storage device integrated by one or more available media, such as a server and a data center. The available medium may be a magnetic medium (for example, a floppy disk, a hard disk, or a magnetic tape), a semiconductor medium (for example, a solid state disk (SSD)), or the like.

A readable storage medium is further provided in the embodiment of the present disclosure, configured to store the method or the algorithm provided in the above embodiments. For example, a random access memory (RAM), a flash memory, a read only memory (ROM), a non-volatile read-only memory (NVROM) memory, an Electronic Programmable ROM (EPROM), a register, a hard disk, a removable disk, or any other form of storage medium in the art.

It should be understood that the "connection" in the embodiment of the present disclosure should be understood as "electrical connection", "communication connection", or the like if the connected circuits, modules, units, or the like have electrical signal or data transmission to each other.

It should be understood that the specific examples herein are merely intended to help those skilled in the art better understand the embodiments of the present disclosure, and do not limit the protection scope of the present disclosure.

It should be understood that, serial numbers of the processes in the various embodiments of the present disclosure do not refer to a sequence according to which the methods are performed. The sequence according to which the methods are performed is determined by functions and internal logic thereof, and should not constitute any limitation on the implementation process of the embodiments of the present disclosure.

It should be understood that the various embodiments described in the present disclosure may be implemented individually or in combination, which are not limited in the embodiments of the present disclosure.

Unless otherwise described, all technical and scientific terms used in the embodiments of the present disclosure have the same meanings as commonly understood by those skilled in the art. The terms are merely intended for describing specific embodiments, rather than limiting the protection scope of the present disclosure. A term "and/or" used in the present disclosure includes all arbitrary combinations of one or multiple relevant items listed. The terms "a/an", "the said", and "the" in a singular form used in the embodiments and appended claims of the present disclosure are intended to include a plural form, unless other meanings are clearly indicated in the context.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be regarded as exceeding the scope of the present disclosure.

Described above are only specific embodiments of the present disclosure, but the protection scope of the present disclosure is not limited thereto. Any modifications or substitutions that can be easily envisaged by those skilled in the art within the technical scope disclosed in the present disclosure shall be covered within the protection scope of the present disclosure. Therefore, the protection scope of the present disclosure is limited by the claims.

## Claims

1. A control method for an energy system, **characterized in that** the energy system comprises a plurality of power units, and each of the plurality of power units comprises a power converter; wherein the control method comprises:
determining (S110) actual maximum power limits of the plurality of power units, in a process of the plurality of power units outputting power with maximum output capacities; and
issuing (S120) target unit power to the plurality of power units respectively, based on the actual maximum power limits of the plurality of power units; wherein the target unit power of each of the plurality of power units is less than or equal to the actual maximum power limit of the power unit.

2. The control method according to claim 1, wherein the determining (S110) actual maximum power limits of the plurality of power units, in a process of the plurality of power units outputting power with maximum output capacities comprises:
controlling one power unit from the plurality of power units as a target power unit to output power with the maximum output capacity, and controlling other power units of the plurality of power units to output a power difference, based on a target demand power, wherein the power difference is a difference between the target demand power and an actual output power of the target power unit; and
determining a maximum of the actual output power as the actual maximum power limit of the target power unit, in the process of the target power unit outputting the power with the maximum output capacity.

3. The control method according to claim 2, wherein each of the plurality of power units comprises a plurality of power converters; and
the controlling one power unit from the plurality of power units as a target power unit to output power with the maximum output capacity, comprises:
for each power converter of the plurality of power converters in the target power unit,
controlling the power converter to output power with a maximum output capacity; and
determining a maximum of an actual output power of the power converter as the actual maximum power limit, in the process of the power converter outputting the power with the maximum output capacity.

4. The control method according to claim 1, wherein the issuing (S120) target unit power to the plurality of power units respectively, based on the actual maximum power limits of the plurality of power units comprises:
for each power unit of the plurality of power units,
determining a proportion coefficient of the actual maximum power limit of the power unit relative to a sum of actual maximum power limits of the plurality of power units, based on the actual maximum power limits of the plurality of power units; and
distributing the target unit power to the power unit based on the proportion coefficient of the power unit and a target demand power.

5. A control method for a power unit, **characterized in that** the power unit comprises a plurality of power converters, and the control method comprises:
determining (S210) actual maximum power limits of the plurality of power converters, in a process of the plurality of power converters outputting power with maximum output capacities; and
issuing (S220) target converter power to the plurality of power converters respectively, based on the actual maximum power limits of the plurality of power converters; wherein the target converter power of each of the plurality of power converters is less than or equal to the actual maximum power limit of the power converter.

6. The control method according to claim 5, wherein the determining (S210) actual maximum power limits of the plurality of power converters, in a process of the plurality of power converters outputting power with maximum output capacities comprises:
controlling one power converter of the plurality of power converters as a target power converter to output power with the maximum output capacity, and controlling other power converters of the plurality of power converters to output a power difference, based on a target unit power, wherein the power difference is a difference between the target unit power and an actual output power of the target power unit; and
determining a maximum of the actual output power as the actual maximum power limit of the target power converter, in the process of the target power converter outputting power with the maximum output capacity.

7. The control method according to claim 5, wherein the issuing (S220) target converter power to the plurality of power converters respectively, based on the actual maximum power limits of the plurality of power converters comprises:
for each power converter of the plurality of power converters,
determining a proportion coefficient of the actual maximum power limit of the power converter relative to a sum of actual maximum power limits of the plurality of power converters, based on the actual maximum power limits of the plurality of power converters; and
distributing the target converter power to the power converter based on the proportion coefficient of the power converter and a target unit power.

8. An energy system, **characterized by**, comprising:
a plurality of power units, wherein each of the plurality of power units comprises at least one power converter; and
a controller, configured to:
determine actual maximum power limits of the plurality of power units, in a process of the plurality of power units outputting power with maximum output capacities; and
issue target unit power to the plurality of power units respectively, based on the actual maximum power limits of the plurality of power units; wherein the target unit power of each of the plurality of power units is less than or equal to the actual maximum power limit of the power unit.

9. The energy system according to claim 8, wherein the controller is configured to control one power unit of the plurality of power units as a target power unit to output power with the maximum output capacity, and control other power units of the plurality of power units to output a power difference, based on the target demand power, wherein the power difference is between the target demand power and an actual output power of the target power unit; and determine a maximum of the actual output power as the actual maximum power limit of the target power unit, in the process of the target power unit outputting power with the maximum output capacity.

10. The energy system according to claim 9, wherein each of the plurality of power units comprises a plurality of power converters; and the controller is configured to:
for each power converter of the plurality of power converters in the target power unit,
control the power converter to output power with a maximum output capacity; and
determine a maximum of an actual output power of the power converter as the actual maximum power limit of the power converter, in the process of the power converter outputting power with the maximum output capacity.

11. The energy system according to claim 8, wherein the controller is configured to:
for each power unit of the plurality of power units,
determine a proportion coefficient of the actual maximum power limit of the power unit relative to a sum of actual maximum power limits of the plurality of power units, based on the actual maximum power limits of the plurality of power units; and
distribute the target unit power to the power unit based on the proportion coefficient of the power unit and a target demand power.

12. A power unit, **characterized by**, comprising:
a plurality of power converters; and
a controller, configured to:
determine actual maximum power limits of the plurality of power converters, in a process of the plurality of power converters outputting power with maximum output capacities; and
issue target converter power to the plurality of power converters respectively, based on the actual maximum power limits of the plurality of power converters; wherein the target converter power of each of the plurality of power converters is less than or equal to the actual maximum power limit of the power converter.

13. The power unit according to claim 12, wherein the controller is configured to control one power converter of the plurality of power converters as a target power converter to output power with the maximum output capacity and control other power converters of the plurality of power converters to output a power difference between a target unit power and an actual output power of the target power unit, based on the target unit power; and determine a maximum of the actual output power as the actual maximum power limit of the target power converter, in the process of the target power converter outputting the power with the maximum output capacity; or
the controller is configured to: for each power converter of the plurality of power converters, determine a proportion coefficient of the actual maximum power limit of the power converter relative to a sum of actual maximum power limits of the plurality of power converters, based on the actual maximum power limits of the plurality of power converters; and distribute the target converter power to the power converter based on the proportion coefficient of the power converter and a target unit power.

14. A control apparatus, comprising a processor (102) and a memory (101), **characterized in that** the memory (101) is configured to store a program, instructions, or codes, and the processor (102) is configured to execute the program, the instructions, or the codes in the memory to implement the method according to any one of claims 1 to 7.

15. A computer-readable storage medium, storing a computer program, **characterized in that** the computer program is loaded by a processor (102) to execute the method according to any one of claims 1 to 7.
